# FASCICULE DE BREVET EUROPEEN

(11) **EP 3 901 019 B1**
(45) Date de publication et mention de la délivrance du brevet: **25.01.2023**
(21) Numéro de dépôt: 21165670.7
(22) Date de dépôt: 29.03.2021
(51) Int. Cl.: B62K 5/10, B62K 5/06, B62K 7/04, B60G 3/12, B62B 13/12, B62B 17/06, B62B 19/04, B62K 5/00, B62M 6/40

(54) **ENSEMBLE STABILISANT POUR VÉHICULE**
STABILISIERUNGSANORDNUNG FÜR FAHRZEUG
STABILISING ASSEMBLY FOR VEHICLE

(30) Priorité: 21.04.2020 FR 2003983
(43) Date de publication de la demande: 27.10.2021
(73) Titulaire: Deberghes, Pierre, 59120 Loos (FR)
(72) Inventeur: DEBERGHES, PIERRE, 59120 LOOS (FR)
(74) Mandataire: Plasseraud IP

(56) Documents cités:
- EP-A2- 3 205 564
- DE-A1-102008 007 108
- FR-A1- 2 311 704
- FR-A1- 2 957 049
- FR-A1- 3 084 330
- FR-A1- 3 087 156

## Description

La présente divulgation est relative à un ensemble stabilisant pour véhicule, ainsi qu'un véhicule équipé d'un tel ensemble.

### Domaine technique

La présente divulgation relève notamment du domaine des cycles et trouve une application particulière pour le transport de charge, et plus particulièrement des cycles stabilisés, tels que ceux à trois roues (non alignées) ou plus.

Toutefois, la présente divulgation n'est pas limitée aux cycles, et peut trouver une application pour d'autres véhicules, tels que par exemple des remorques, voitures électriques...

### Technique antérieure

Le document du présent demandeur, déposé sous le n° FR1900020, publiée sous le numéro FR 3 084 330 décrit un tricycle trouvant une application particulière pour le transport de charge.

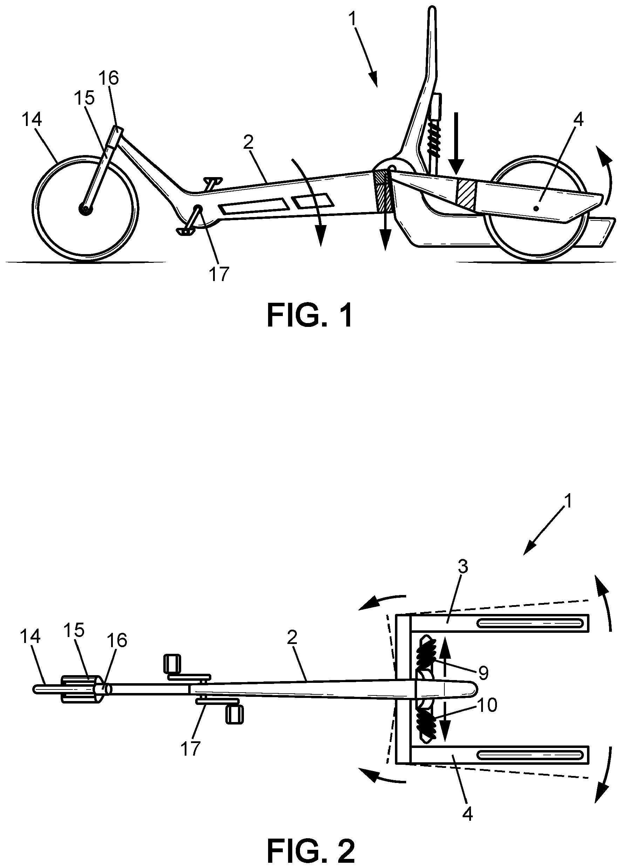

De manière notable et tel que schématisé à la figure 1, ce tricycle pendulaire, comprend un train avant, directionnel mono-roue, et un train arrière comprenant un ensemble stabilisant, y compris un châssis 2 formant une partie suspendue du véhicule, et un système stabilisateur comprenant deux bras consistant en un premier bras 3 et un deuxième bras 4. Le premier bras 3 présente une extrémité proximale articulée au châssis 2, et une extrémité distale au niveau de laquelle est solidaire une roue formant une première partie non-suspendue 5 du tricycle. Le deuxième bras 4 présente une extrémité proximale articulée au châssis 2, et une extrémité distale au niveau de laquelle est solidaire une roue formant une deuxième partie non-suspendue 6 du véhicule.

Les deux bras forment un système stabilisateur pendulaire, permettant d'incliner le cycle suivant l'axe de roulis, à droite lorsque la direction dirige le cycle à droite, et à gauche, lorsque la direction du cycle à gauche dirige le cycle à gauche.

De manière notable, l'inter-espace entre les deux bras est « sans essieu », ce qui permet de libérer un inter-espace pour un porte-charge solidaire rigidement à la structure de châssis.

De manière notable également, l'ensemble est amorti grâce à deux amortisseurs montés en jambage de force, y compris un premier amortisseur en jambage de force 9 reliant le premier bras 3 au châssis 2 et un deuxième amortisseur en jambage de force 10 reliant le deuxième bras. Les deux amortisseurs en jambage de force sont articulés à leur extrémité inférieure, respectivement, aux deux bras pivotant tandis que leurs extrémités supérieures sont solidaires à un même support, à fonction de came, apte à se déplacer selon une course limitée le long d'un guide, fixe par rapport au châssis à fonction de suiveur de came, pour permettre des inclinaisons du tricycle par les deux bras.

Selon les essais de l'inventeur, une telle conception est avantageuse en ce qu'elle permet un confort d'utilisation pour un cycle porte-charge, en permettant d'incliner le véhicule dans les virages, et de filtrer les imperfections de la route, et grâce aux pivotements des bras. Toutefois et sous la charge, une telle conception avec amortisseurs en jambage de force génère deux forces dirigées vers l'extérieur qui tendent à écarter les deux bras l'un de l'autre. Une telle conception limite ainsi la charge utile du porte-charge de l'ordre de 100 kg, sous peine de générer des efforts extérieurs trop importants sur les bras. Des charges plus importantes nécessiteraient un renforcement substantiel des bras et de leur liaison avec le châssis, mais au détriment de l'augmentation de la masse du tricycle.

### Résumé

La présente divulgation vient améliorer la situation.

Aussi la présente divulgation concerne, selon un premier aspect, un ensemble stabilisant pour véhicule comprenant :
- un châssis formant une partie suspendue du véhicule,
- un système stabilisateur comprenant deux bras consistant en un premier bras et un deuxième bras,

et dans lequel le premier bras présente une extrémité proximale articulée au châssis, et une extrémité distale au niveau de laquelle est solidaire une première partie non-suspendue du véhicule, ladite extrémité distale étant configurée pour se déplacer en étant contenue dans un premier plan par rapport au châssis
et dans lequel le deuxième bras présente une extrémité proximale articulée au châssis, et une extrémité distale au niveau de laquelle est solidaire une deuxième partie non-suspendue du véhicule, configurée pour se déplacer en étant contenue dans un deuxième plan par rapport au châssis,
et dans lequel le premier bras et le deuxième bras libèrent un inter-espace entre les deux plans, consistant en le premier plan et le deuxième plan.

Selon la présente divulgation, ledit système stabilisateur comprend, outre le premier bras et ledit deuxième bras :
- au moins un lien souple reliant le premier bras au deuxième bras, configuré pour travailler en traction, en tendant au rapprochement des deux bras,
- un dispositif porte-charge, articulé audit châssis, s'étendant dans l'inter-espace entre les deux plans, en appui sur le au moins un lien souple,
- un système d'entretoisement s'opposant au rapprochement des deux bras,
et dans lequel le dispositif porte-charge et le au moins un lien souple sont configurés pour coopérer entre eux avec un report de la charge dudit dispositif porte-charge sur ledit au moins un lien souple de sorte que ledit au moins un lien souple assure un effort de traction entre le premier bras et le deuxième bras corrélé à la charge dudit dispositif porte-charge, l'effort de traction tendant au rapprochement des deux bras étant équilibré par un effort contraire dû à entretoisement des deux bras par le système d'entretoisement.

Les caractéristiques exposées dans les paragraphes suivants peuvent, optionnellement, être mises en oeuvre.

Le système d'entretoisement comprend une première surface de guidage, sensiblement parallèle au premier plan coopérant avec le premier bras, et une deuxième surface de guidage, sensiblement parallèle au deuxième plan, coopérant avec le deuxième bras et dans lequel l'effort de traction tendant au rapprochement des deux bras étant équilibré par l'effort contraire dû à l'entretoisement des deux bras par le système d'entretoisement avec coopération de la première surface de guidage contre le premier bras et de la deuxième surface de guidage contre le deuxième bras .

Le dispositif porte-charge est articulé au châssis suivant un axe de pivot.

Ledit système d'entretoisement y compris la première surface de guidage et la seconde surface de guidage est embarqué au dispositif porte-charge.

La première surface de guidage et la deuxième surface de guidage sont prolongées entre-elles par une troisième surface de guidage dudit dispositif support de charge, en appui sur le au moins un lien souple, intermédiaire la première surface de guidage et la deuxième surface de guidage. Notamment trois surfaces de guidage consistant en la première surface de guidage, la deuxième surface de guidage et la troisième surface de guidage forment une surface continue, le long des trois surfaces de guidage, la surface continue présentant un profil en U.

Ledit ensemble stabilisant est pendulaire, et dans lequel le châssis présentant un premier axe suivant la direction d'avance du véhicule en ligne droite et dans lequel le système stabilisateur est pendulaire, le premier bras et le deuxième bras étant configurés pour être articulés au châssis de manière à permettre l'inclinaison du châssis dans les virages.

Ledit système d'entretoisement comprend deux amortisseurs, montés en jambage de force, y compris un premier amortisseur en jambage de force, reliant le premier bras au châssis et un deuxième amortisseur en jambage de force reliant le deuxième bras au châssis.

Le premier amortisseur en jambage de force est fixé à son extrémité basse au premier bras et le deuxième amortisseur en jambage de force est fixé à son extrémité basse au deuxième bras, l'extrémité supérieure du premier amortisseur en jambage de force et l'extrémité supérieure du deuxième amortisseur en jambage de force étant fixées à un même support à fonction de came configuré pour se déplacer selon une course limitée le long d'un guide fixe à fonction de suiveur de came, fixe par rapport au châssis pour permettre l'inclinaison du châssis lors des virage.

Ledit ensemble stabilisant comprenant deux amortisseurs consistant en un premier amortisseur entre le premier bras et la première partie non suspendue du véhicule, et un deuxième amortisseur entre le deuxième bras et la deuxième partie non suspendue du véhicule.

La première partie non suspendue et la deuxième partie non suspendue sont choisies parmi :
- des roues,
- des patins.

Selon deuxième aspect, la présente divulgation est relative à un véhicule comprenant un ensemble stabilisant selon la présente divulgation. Le véhicule peut être un cycle, en particulier un tricycle ou quadricycle.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] montre une vue schématique de côté d'un tricycle selon l'état de la technique.
**Fig. 2**
   [Fig. 2] est une vue de dessus, illustrant en trait pointillé la déformation (volontairement exagérée) des bras sous l'effort des amortisseurs montés en jambage de force.
**Fig. 3**

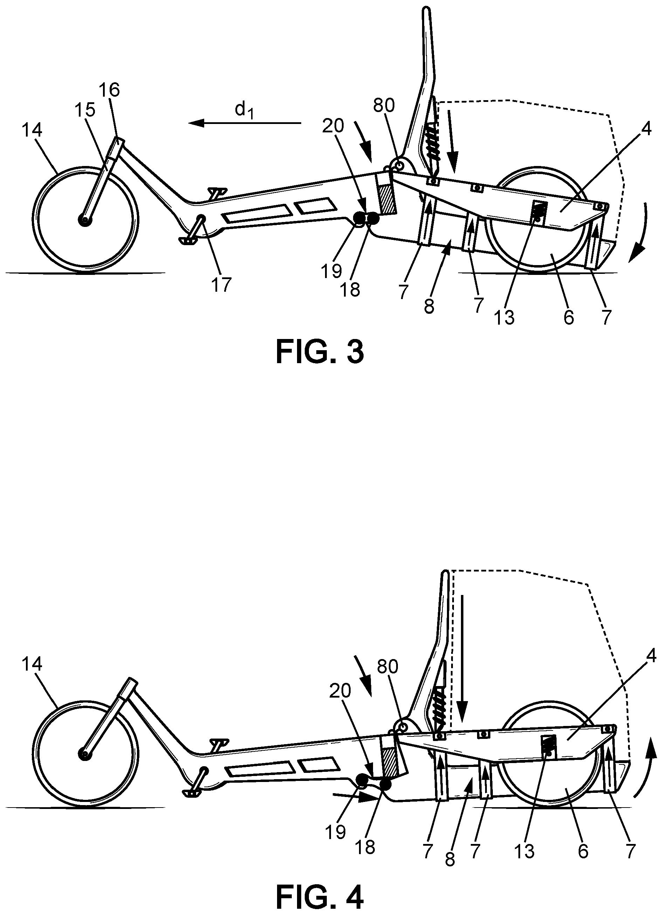

   [Fig. 3] est une vue de côté d'un véhicule (un tricycle) équipé d'un ensemble stabilisant conforme à la présente divulgation selon un mode de réalisation (avec amortisseurs en jambage de force), dans une position non compressée des amortisseurs.
**Fig. 4**
   [Fig. 4] est une vue du véhicule selon la figure 3, dans une position compressée des amortisseurs.
**Fig. 5**

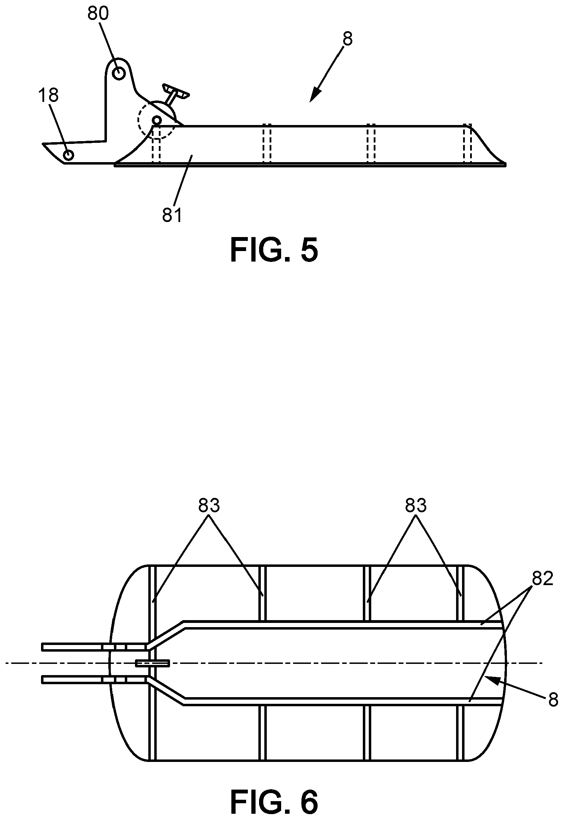

   [Fig. 5] est une vue de détail, de côté du corps principal du dispositif porte-charge.
**Fig. 6**
   [Fig. 6] est une vue de dessus de la figure 5.
**Fig. 7**

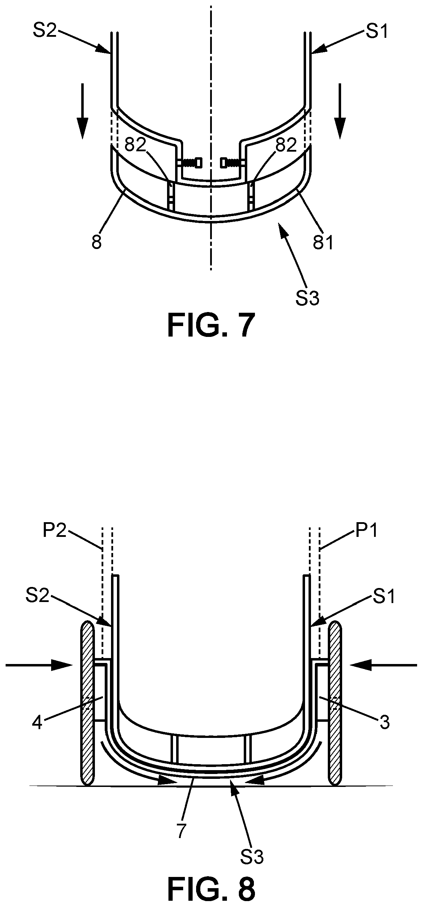

   [Fig. 7] est une vue de coupe du corps du dispositif porte-charge de la figure 5, ainsi que de l'assemblage supplémentaire d'une partie formant une première surface de guidage destinée à coopérer avec le premier bras, et une deuxième surface de guidage destinée à coopérer avec le deuxième bras.
**Fig. 8**
   [Fig. 8] est une vue de coupe de l'ensemble stabilisant, illustrant le travail de ladite au moins une liaison souple exerçant un effort sur les deux bras, premier bras et deuxième bras, tendant à leur rapprochant, qui est interdit par l'entretoisement du dispositif porte-charge et en particulier l'action des surfaces de guidage, première surface de guidage contre le premier bras, et deuxième surface de guidage contre le deuxième bras.
**Fig. 9**

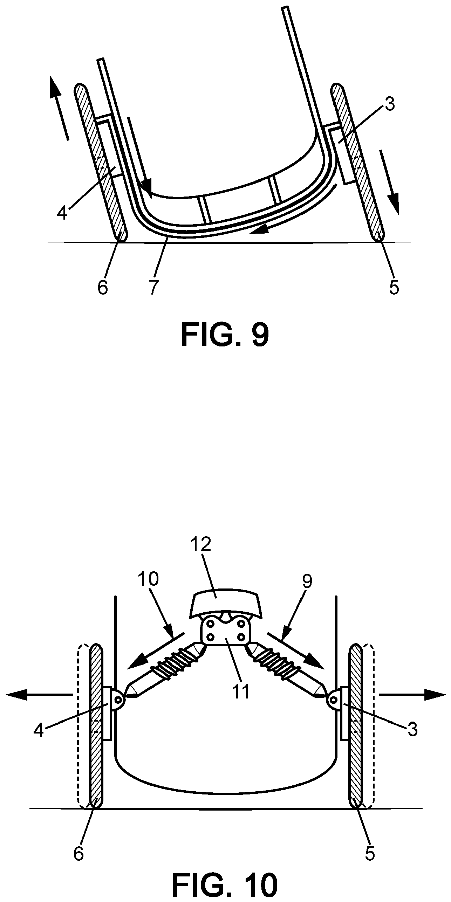

   [Fig. 9] est vue de la figure 8, lorsque les bras, premier bras et deuxième bras sont orientés par rapport aux châssis de sorte à incliner le cycle vers la droite.
**Fig. 10**
   [Fig. 10] est une vue de coupe de l'ensemble, illustrant plus particulièrement les amortisseurs montés en jambage de force, solidaires par leur extrémité supérieure à un même support, à fonction de came, configuré pour suivre la trajectoire d'un guide fixe, à fonction de suiveur de came, pour permettre l'inclinaison pendulaire du véhicule.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi la présente divulgation est relative un ensemble stabilisant 1 pour véhicule comprenant :
- un châssis 2 formant une partie suspendue du véhicule,
- un système stabilisateur comprenant deux bras consistant en un premier bras 3 et un deuxième bras 4.

Le premier bras 3 présente une extrémité proximale articulée au châssis 2, et une extrémité distale au niveau de laquelle est solidaire une première partie non-suspendue 5 du véhicule, ladite extrémité distale étant configurée pour se déplacer en étant contenue dans un premier plan P1 par rapport au châssis 2.

Le deuxième bras 4 présente une extrémité proximale articulée au châssis 2, et une extrémité distale au niveau de laquelle est solidaire une deuxième partie non-suspendue du véhicule 6, configurée pour se déplacer en étant contenue dans un deuxième plan P2.

La première partie non suspendue 5 et la deuxième partie non suspendue 6 peuvent comprendre chacune une roue (voire plusieurs roues), telles que par exemple illustrées dans l'exemple. Alternativement, la première partie non suspendue 5, et la deuxième partie non suspendue 6 peuvent être chacune un patin destiné à glisser sur le sol, par exemple sur la neige/glace.

Le premier bras 3 et le deuxième bras 4 libèrent un inter-espace entre les deux plans P1, P2, consistant en le premier plan P1 et le deuxième plan P2. Ces deux plans P1, P2 sont de préférence de positions fixes par rapport au châssis.

Ces deux plans P1, P2 peuvent être, parallèles entre eux, verticaux, au moins lorsque le véhicule se déplace en ligne droite.

Dans un véhicule présentant un train avant et un train arrière, suivant le sens normal de déplacement du véhicule, ledit ensemble stabilisant 1, en particulier le premier bras 3 et la première partie non suspendue 5 et le deuxième bras 4 et la deuxième partie non suspendue 6 peuvent faire partie du train arrière du véhicule, et comme illustré dans l'exemple.

Alternativement, et selon une variante non illustrée, ledit ensemble stabilisant 1, en particulier le premier bras 3 et la première partie non suspendue 5 et le deuxième bras 4 et la deuxième partie non suspendue 6 peuvent faire partie du train avant du véhicule.

Selon la présente divulgation, ledit système stabilisateur comprend, outre le premier bras 3 et ledit deuxième bras 4 :
- au moins un lien souple 7 reliant le première bras 3 au deuxième bras 4, configuré pour travailler en traction, en tendant au rapprochement des deux bras 3,4,
- un dispositif porte-charge 8, articulé audit châssis, s'étendant dans l'inter-espace entre les deux plans P1, P2, en appui sur le au moins un lien souple 7,
- un système d'entretoisement s'opposant au rapprochement des deux bras 3,4.

Le dispositif porte-charge 8 et le au moins un lien 7 souple sont configurés pour coopérer entre eux avec un report de la charge dudit dispositif porte-charge 8 sur ledit au moins un lien souple 7 de sorte que ledit au moins un lien souple 7 assure un effort de traction entre le premier bras 3 et le deuxième bras 4. Cet effort dû à la traction opérée par le lien souple 7 est illustré par les deux flèches dirigées l'une vers l'autre à la figure 8. Cet effort de traction est avantageusement corrélé à la charge dudit dispositif porte-charge.

Cet effort de traction tendant au rapprochement des deux bras 3,4 est équilibré par un effort contraire dû à l'entretoisement des deux bras 3,4 par le système d'entretoisement.

Le système d'entretoisement peut comprendre une première surface de guidage S1, sensiblement parallèle au premier plan P1 coopérant avec le premier bras 3, et une deuxième surface de guidage S2, sensiblement parallèle au deuxième plan P2, coopérant avec le deuxième bras 4, les deux surfaces de guidage consistant en la première surface de guidage S1 et deuxième surface de guidage S2 étant d'écartement déterminé, relié à un même support.

Ce système d'entretoisement avec les deux surfaces de guidage S1, S2 peut être embarqué au dispositif porte-charge, déplaçable avec lui par rapport au châssis. Les surfaces de guidage S1 et S2 sont de préférence localisées, suivant l'axe longitudinal des bras, au niveau de la zone de travail de ladite au moins une liaison souple 7.

L'effort de traction tendant au rapprochement des deux bras 3,4 est équilibré par un effort contraire dû à un entretoisement des deux bras 3,4 par le système d'entretoisement avec coopération de la première surface de guidage S1 contre le premier bras 3 et de la deuxième surface de guidage S2 contre le deuxième bras 4.

Le cas échéant, l'effort contraire équilibrant l'effort de traction de ladite au moins une liaison peut encore comprendre l'action d'un système d'amortisseurs à jambage de force qui est décrit par la suite, y compris un premier amortisseur 9 à jambage de force reliant le châssis 2 au premier bras 3, et un deuxième amortisseur à jambage de force 10 reliant le châssis au deuxième bras 4.

Selon un mode de réalisation, ledit système d'entretoisement comprend non seulement les surfaces de guidage S1, S2 d'écartement déterminé, mais encore le système d'amortisseurs à jambage de force.

Les actions contraires du système d'entretoisement et de ladite au moins une liaison souple 7 permettent avantageusement d'assurer le maintien mécanique des deux bras 3, 4, en évitant les fléchissements des deux bras, que ce soit vers l'intérieur, grâce audit système d'entretoisement, ou encore vers l'extérieur, grâce à l'effort de traction de ladite au moins une liaison souple 7. On limite avantageusement le fléchissement des deux bras, et sans avoir à les rigidifier, et par comparaison à l'état de la technique illustré à la figure tel qu'illustré à la figure 2, lorsque ledit ensemble stabilisant est dépourvu de ladite liaison souple 7, et dudit dispositif porte-charge 8 articulé au châssis, l'action du système d'amortisseur à jambage de force tend à fléchir les bras vers l'extérieur, ce qui oblige à limiter la charge, ou à surdimensionner les bras et leur articulation au châssis.

Il est ainsi possible d'augmenter sensiblement la capacité de chargement dudit dispositif porte-charge 8, avantageusement sans augmenter substantiellement la masse dudit ensemble stabilisant 1.

L'articulation entre le premier bras 3 et le châssis 2 et entre le deuxième bras 4 peuvent être des liaisons pivots. Les axes de deux liaisons pivots peuvent être confondus, et sensiblement perpendiculaires aux plans P1, P2.

Selon un mode de réalisation, le dispositif porte-charge 8 est articulé au châssis 2 suivant un axe de pivot 80, qui peut être sensiblement perpendiculaire aux deux plans consistants entre le premier plan P1 et le deuxième plan P2.

Selon un mode de réalisation, ladite au moins une liaison souple comprend une unique liaison souple reliant les deux bras consistant en le premier bras 3 et le deuxième bras 4, par ses extrémités.

Selon un autre mode de réalisation, ladite au moins une liaison souple 7 comprend plusieurs liaisons souples, respectivement réparties suivant la longueur des deux bras. Chaque liaison souple relie par ses deux extrémités les deux bras 3,4, consistant en le premier bras 3 et ledit second bras 4.

Selon un mode de réalisation, ledit système d'entretoisement y compris la première surface de guidage S1 et la seconde surface de guidage S2 est embarqué au dispositif porte-charge 8.

Selon un mode de réalisation, la première surface de guidage S1 et la deuxième surface de guidage S2 sont prolongées entre elles par une troisième surface de guidage S3 dudit dispositif support de charge 8, en appui sur le au moins un lien souple 7. Cette troisième surface S3, est positionnée intermédiaire entre la première surface de guidage S1 et la deuxième surface de guidage S2.

Selon un mode de réalisation, les trois surfaces de guidage consistant en la première surface de guidage S1, la deuxième surface de guidage S2 et la troisième surface de guidage S3 forment une surface continue, le long de trois surfaces de guidage, la surface continue présente un profil en U.

Le dispositif porte-charge 8 est illustré en détail et, à titre d'exemple non limitatif aux figures 5 à 7.

De manière générale, il comprend sur sa partie d'avant, une articulation 80 pour sa liaison au châssis 2, par exemple selon une liaison pivot. Son corps peut comprendre un mécano-soudé, y compris une tôle courbée 81 formant la sous-face dudit dispositif porte charge, de forme convexe vers le bas. Cette sous-face permet l'appui de ladite au moins une liaison souple 7, à savoir une unique liaison souple, ou une pluralité de liaisons souples, prenant appui, sur la sous-face, respectivement, à différents niveaux sur la longueur du corps. Cette sous-face est de préférence lisse (sans angle vif) afin de permettre à ladite au moins une liaison souple de glisser, en limitant les frottements et sa dégradation.

Le corps du dispositif peut comprendre des renforts, supérieurs dans la concavité de la tôle formant sous-face. Il peut s'agir de renforts 82 s'étendant longitudinalement au corps, suivant l'axe longitudinal du véhicule et des renforts 83 s'étendant transversalement. Eventuellement, ces renforts peuvent prendre la forme de tôles, notamment verticale. Ces renforts peuvent permettre de partitionner la concavité de la tôle en plusieurs compartiments, utiles au stockage.

Le système d'entretoisement, (avec sa première surface de guidage S1 et sa seconde surface de guidage S2) peut être prévu comme des tôles fixées au corps formant la sous face, et rapporté sur ce dernier, comme illustré à la figure 7.

De manière générale, ledit dispositif support de charge 8, offre une capacité de chargement, ouverture sur l'arrière du véhicule, lorsque ledit ensemble stabilisant forme le train arrière du véhicule, ou encore ouverture vers l'avant du véhicule lorsque ledit ensemble stabilisant forme le train avant.

Selon un mode de réalisation, ledit ensemble stabilisant est pendulaire, dans lequel le châssis 2 présentant un premier axe suivant la direction d₁ d'avance du véhicule en ligne droite et dans lequel le système stabilisateur est pendulaire, le premier bras 3 et le deuxième bras 4 étant configurés pour être articulés au châssis de manière à permettre l'inclinaison du châssis dans les virages. A cet effet, l'angle entre le premier axe du châssis 2 et le premier bras 3 et l'angle entre le premier axe du châssis et le deuxième bras 4 peuvent être différents.

Selon un mode de réalisation, ledit système d'entretoisement comprend deux amortisseurs, montés en jambage de force, y compris un premier amortisseur en jambage de force 9, reliant le premier bras 3 au châssis 2 et un deuxième amortisseur en jambage de force 10 reliant le deuxième bras 4 au châssis 2. Le premier amortisseur en jambage de force 9 est fixé à son extrémité basse au premier bras 3 et le deuxième amortisseur en jambage de force 10 est fixé à son extrémité basse au deuxième bras 4 l'extrémité supérieure du premier amortisseur en jambage de force et l'extrémité supérieure du deuxième amortisseur en jambage de force étant fixées au châssis 2.

Lorsque ledit ensemble stabilisant est pendulaire, l'extrémité supérieure du premier amortisseur en jambage de force 9 et l'extrémité supérieure du deuxième amortisseur en jambage de force 10 sont fixées à un même support 11 à fonction de came configuré pour se déplacer selon une course limitée le long d'un guide fixe 12 à fonction de suiveur de came, fixe par rapport au châssis 2 pour permettre l'inclinaison du châssis lors des virage. Le support 11 à fonction de came est configuré pour se déplacer le long du guidage fixe 12 lors de l'inclinaison dudit ensemble, et selon une course limitée par deux butées extrêmes du guide fixe.

Eventuellement, les butées extrémités sont de positions réglables sur le guide fixe 12, de manière continue, ou au moins en plusieurs positions discontinues, autorisant le réglage de la plage angulaire d'inclinaison dudit ensemble stabilisant pendulaire.

Selon un mode de réalisation, ledit ensemble peut comprendre deux amortisseurs 13 consistant en un premier amortisseur entre le premier bras 3 et la première partie non suspendue du véhicule 5, et un deuxième amortisseur entre le deuxième bras 4 et la deuxième partie non suspendue 6 du véhicule.

Ces deux amortisseurs 13 peuvent être prévus additionnement au système d'amortisseur à jambage de force, au moins selon un mode de réalisation.

Selon un mode de réalisation, ledit ensemble peut encore comprendre, un système d'amortisseur 20 entre le châssis 2 et ledit dispositif support de charge 8. Par exemple, le système d'amortisseur 20 comprend un moyen élastique, travaillant en traction entre un point d'accroche 18 sur le dispositif support de charge 8 et un point d'accroche 19 sur le châssis.

La présente divulgation est relative à un véhicule comprenant un ensemble stabilisant selon la présente divulgation, formant le train avant du véhicule ou encore le train-arrière du véhicule.

Selon un mode de réalisation, illustré à titre d'exemple non limitatif aux figures, le véhicule est un cycle, en particulier un tricycle.

Selon un mode de réalisation, le train avant comprend une roue 14 (directionnelle) portée par une fourche 15, articulée en pivot dans un tube de direction 16 du châssis 2. Le châssis porte également une selle, ou siège, non illustré, et un guidon non illustré (ou volant) autorisant le contrôle de la roue directionnel.

Le guidon (ou volant) est en montage direct avec la fourche, ou encore indirectement par une transmission, comprenant par exemple des bielles, encore des câbles, ou encore un arbre de direction, éventuellement avec cardan(s). Le cycle peut encore comprendre un pédalier 17 et une transmission entre le pédalier et les roues arrières, et comme enseigné dans le document FR 3 084330.

Le cycle, notamment tricycle peut être un cycle musculaire, ou encore comportant une assistance électrique.

L'assistance électrique peut comprendre par exemple un premier moteur électrique solidaire du premier bras 3, pour entrainement de la roue formant la première partie non suspendue 5, et un deuxième moteur pour l'entrainement de la roue formant la deuxième partie non suspendue 6.

La ou les batteries de l'assistance électrique peuvent être avantageusement être portée(s) par le dispositif support de charge 8, et notamment reçue(s) dans un ou des compartiments formés par les renforts.

L'assistance électrique peut encore comprendre un capteur de pédale (capteur de rotation, capteur de pression ou de couple). Le signal de ce capteur en entrée du calculateur permet de déclencher l'assistance électrique, notamment jusqu'à une vitesse maximale, par exemple bridée à 25 km/h.

### Liste des signes de référence

- 1 : Ensemble stabilisant,
- 2. Châssis,
- 3. Premier bras,
- 4. Deuxième bras,
- 5. Première partie non suspendue (par exemple roue),
- 6. Deuxième partie non suspendue (par exemple roue),
- 7. Au moins un lien souple (par exemple sangle),
- 8. Dispositif porte-charge,
- 80. Axe de pivot,
- 81. Tôle courbée (sous face),
- 82, 83. Renforts (longitudinaux/transversaux)
- 9. Premier amortisseur en jambage de force,
- 10. Deuxième amortisseur en jambage de force,
- 11. Support à fonction de came,
- 12. Guide fixe à fonction de suiveur de came,
- 13. Amortisseurs (entre la partie non suspendue 5 et le premier bras 3 et entre la partie non suspendue 6 et le deuxième bras 4).
- 14. Roue,
- 15. Fourche,
- 16. Tube de direction,
- 17 Pédalier,
- 18, 19. Points d'accroche respectivement sur le dispositif support de charge et le châssis,
- 20. Système d'amortisseur reliant le châssis au dispositif support de charge 8.

## Revendications

1. Ensemble stabilisant (1) pour véhicule comprenant :
- un châssis (2) formant une partie suspendue du véhicule,
- un système stabilisateur comprenant deux bras consistant en un premier bras (3) et un deuxième bras (4),
et dans lequel le premier bras (3) présente une extrémité proximale articulée au châssis (2), et une extrémité distale au niveau de laquelle est solidaire une première partie non-suspendue (5) du véhicule, ladite extrémité distale étant configurée pour se déplacer en étant contenue dans un premier plan (P1) par rapport au châssis (2)
et dans lequel le deuxième bras (4) présente une extrémité proximale articulée au châssis (2), et une extrémité distale au niveau de laquelle est solidaire une deuxième partie non-suspendue du véhicule (6), configurée pour se déplacer en étant contenue dans un deuxième plan (P2) par rapport au châssis et dans lequel le premier bras (3) et le deuxième bras (4) libèrent un inter-espace entre les deux plans (P1, P2), consistant en le premier plan (P1) et le deuxième plan (P2),
**caractérisé en ce que** ledit système stabilisateur comprend
- au moins un lien souple (7) reliant le premier bras (3) au deuxième bras (4), configuré pour travailler en traction, en tendant au rapprochement des deux bras (3,4),
- un dispositif porte-charge (8), articulé audit châssis, s'étendant dans l'inter-espace entre les deux plans (P1, P2), en appui sur le au moins un lien souple (7),
- un système d'entretoisement s'opposant au rapprochement des deux bras (3,4), et dans lequel le dispositif porte-charge (8) et le au moins un lien (7) souple sont configurés pour coopérer entre eux avec un report de la charge dudit dispositif porte-charge (8) sur ledit au moins un lien souple (7) de sorte que ledit au moins un lien souple (7) assure un effort de traction entre le premier bras (3) et le deuxième bras (4) corrélé à la charge dudit dispositif porte-charge, l'effort de traction tendant au rapprochement des deux bras (3,4) étant équilibré par un effort contraire dû à l'entretoisement des deux bras (3,4) par le système d'entretoisement.

2. Ensemble selon la revendication 1 dans lequel le système d'entretoisement comprend une première surface de guidage (S1), sensiblement parallèle au premier plan (P1) coopérant avec le premier bras (3), et une deuxième surface de guidage (S2), sensiblement parallèle au deuxième plan (P2), coopérant avec le deuxième bras (4) et dans lequel l'effort de traction tendant au rapprochement des deux bras (3,4) est équilibré par l'effort contraire dû à l'entretoisement des deux bras (3,4) par le système d'entretoisement avec coopération de la première surface de guidage (S1) contre le premier bras (3) et de la deuxième surface de guidage (S2) contre le deuxième bras (4).

3. Ensemble stabilisant selon la revendication 1, dans lequel le dispositif porte-charge (8) est articulé au châssis (2) suivant un axe de pivot (80).

4. Ensemble stabilisant selon la revendication 2 seule ou prise en combinaison avec la revendication 3, dans lequel ledit système d'entretoisement y compris la première surface de guidage (S1) et la seconde surface de guidage (S2) est embarqué au dispositif porte-charge (8).

5. Ensemble stabilisant selon la revendication 4, dans lequel la première surface de guidage (S1) et la deuxième surface de guidage (S2) sont prolongées entre elles par une troisième surface de guidage (S3) dudit dispositif porte-charge (8), en appui sur le au moins un lien souple (7), intermédiaire de la première surface de guidage (S1) et de la deuxième surface de guidage (S2).

6. Ensemble selon la revendication 5, dans lequel les trois surfaces de guidage consistant en la première surface de guidage (S1), la deuxième surface de guidage (S2) et la troisième surface de guidage (S3) forment une surface continue, le long des trois surfaces de guidage, la surface continue présentant un profil en U.

7. Ensemble selon l'une des revendications 1 à 5, pendulaire, dans lequel le châssis (2) présente un premier axe suivant la direction (d₁) d'avance du véhicule en ligne droite et dans lequel le système stabilisateur est pendulaire, le premier bras (3) et le deuxième bras (4) étant configurés pour être articulés au châssis de manière à permettre l'inclinaison du châssis dans les virages.

8. Ensemble selon l'une des revendications 1 à 6, dans lequel ledit système d'entretoisement comprend deux amortisseurs, montés en jambage de force, y compris un premier amortisseur en jambage de force (9), reliant le premier bras (3) au châssis (2) et un deuxième amortisseur en jambage de force (10) reliant le deuxième bras (4) au châssis (2).

9. Ensemble selon les revendications 7 et 8, dans lequel le premier amortisseur en jambage de force (9) est fixé à son extrémité basse au premier bras (3) et le deuxième amortisseur en jambage de force (10) est fixé à son extrémité basse au deuxième bras (4), l'extrémité supérieure du premier amortisseur en jambage de force et l'extrémité supérieure du deuxième amortisseur en jambage de force étant fixées à un même support (11) à fonction de came configuré pour se déplacer selon une course limitée le long d'un guide fixe (12) à fonction de suiveur de came, fixe par rapport au châssis (2) pour permettre l'inclinaison du châssis lors des virages.

10. Ensemble selon l'une des revendication 1 à 8, comprenant deux amortisseurs (13) consistant en un premier amortisseur entre le premier bras (3) et la première partie non-suspendue (5) du véhicule, et un deuxième amortisseur entre le deuxième bras (4) et la deuxième partie non-suspendue (6) du véhicule.

11. Ensemble selon l'une des revendications 1 à 9, dans lequel la première partie non-suspendue dme (5) et la deuxième partie non-suspendue (6) sont choisies parmi :
- des roues, ou
- des patins.

12. Véhicule comprenant un ensemble stabilisant selon l'une des revendications 1 à 9 dans lequel le véhicule est un cycle.

## Patentansprüche

1. Stabilisierungsanordnung (1) für ein Fahrzeug, umfassend:
- einen Rahmen (2), der einen aufgehängten Teil des Fahrzeugs bildet,
- ein Stabilisierungssystem, umfassend zwei Arme, die aus einem ersten Arm (3) und einem zweiten Arm (4) bestehen,
und wobei der erste Arm (3) ein proximales Ende aufweist, das mit dem Rahmen (2) gelenkig verbunden ist, und ein distales Ende aufweist, an dem ein erster nicht aufgehängter Teil (5) des Fahrzeugs befestigt ist, wobei das distale Ende dazu ausgebildet ist, sich zu bewegen und in einer ersten Ebene (P1) in Bezug auf den Rahmen (2) enthalten zu sein,
und wobei der zweite Arm (4) ein proximales Ende aufweist, das mit dem Rahmen (2) gelenkig verbunden ist, und ein distales Ende aufweist, an dem ein zweiter, nicht aufgehängter Teil des Fahrzeugs (6) befestigt ist, dazu ausgebildet, sich zu bewegen, und in einer zweiten Ebene (P2) in Bezug auf den Rahmen enthalten zu sein,
und wobei der erste Arm (3) und der zweite Arm (4) einen Zwischenraum zwischen den beiden Ebenen (P1, P2) freigeben, der aus der ersten Ebene (P1) und der zweiten Ebene (P2) besteht,
**dadurch gekennzeichnet, dass** das Stabilisierungssystem umfasst
- wenigstens ein flexibles Verbindungselement (7), das den ersten Arm (3) mit dem zweiten Arm (4) verbindet, dazu ausgebildet, auf Zug zu arbeiten und dazu zu neigen, die beiden Arme (3, 4) einander anzunähern,
- eine lasttragende Vorrichtung (8), die mit dem Rahmen gelenkig verbunden ist und sich in den Zwischenraum zwischen den beiden Ebenen (P1, P2) erstreckt, in Anlage an das wenigstens eine flexible Verbindungselement (7),
- ein Verstrebungssystem, das der Annäherung der beiden Arme (3, 4) entgegenwirkt,
und wobei die lasttragende Vorrichtung (8) und das wenigstens eine flexible Verbindungselement (7) dazu ausgebildet sind, zusammenzuwirken, mit einer Verschiebung der Last der lasttragenden Vorrichtung (8) auf das wenigstens eine flexible Verbindungselement (7), so dass das wenigstens eine flexible Verbindungselement (7) eine Zugkraft zwischen dem ersten Arm (3) und dem zweiten Arm (4) gewährleistet, die mit der Last der lasttragenden Vorrichtung korreliert, wobei die Zugkraft, die zur Annäherung der beiden Arme (3, 4) tendiert, aufgrund der Verstrebung der beiden Arme (3, 4) durch das Verstrebungssystem durch eine Gegenkraft ausgeglichen wird.

2. Anordnung nach Anspruch 1, wobei das Verstrebungssystem eine erste Führungsoberfläche (S1) umfasst, die im Wesentlichen parallel zur ersten Ebene (P1) ist und mit dem ersten Arm (3) zusammenwirkt, und eine zweite Führungsoberfläche (S2) umfasst, die im Wesentlichen parallel zur zweiten Ebene (P2) ist und mit dem zweiten Arm (4) zusammenwirkt und wobei die Zugkraft, die zur Annäherung der beiden Arme (3, 4) führt, durch die Gegenkraft ausgeglichen, wird, durch die Verstrebung der beiden Arme (3, 4) durch das Verstrebungssystem mit einem Zusammenwirken der ersten Führungsfläche (S1) gegen den ersten Arm (3) und der zweiten Führungsfläche (S2) gegen den zweiten Arm (4).

3. Stabilisierungsanordnung nach Anspruch 1, wobei die lasttragende Vorrichtung (8) entlang einer Schwenkachse (80) gelenkig mit dem Rahmen (2) verbunden ist.

4. Stabilisierungsanordnung nach Anspruch 2 allein oder in Kombination mit Anspruch 3, wobei das Verstrebungssystem einschließlich der ersten Führungsfläche (S1) und der zweiten Führungsfläche (S2) an der lasttragenden Vorrichtung (8) angebracht ist.

5. Stabilisierungsanordnung nach Anspruch 4, wobei die erste Führungsfläche (S1) und die zweite Führungsfläche (S2) dazwischen durch eine dritte Führungsfläche (S3) der lasttragenden Vorrichtung (8) verlängert sind, in Anlage an das wenigstens eine flexible Verbindungselement (7) zwischen der ersten Führungsfläche (S1) und der zweiten Führungsfläche (S2).

6. Anordnung nach Anspruch 5, wobei die drei Führungsflächen, bestehend aus der ersten Führungsfläche (S1), der zweiten Führungsfläche (S2) und der dritten Führungsfläche (S3), entlang der drei Führungsflächen eine durchgehende Fläche bilden, wobei die durchgehende Fläche ein U-förmiges Profil aufweist.

7. Anordnung nach einem der Ansprüche 1 bis 5, pendelnd, wobei der Rahmen (2) eine erste Achse aufweist, gemäß der Fahrtrichtung (d₁) des Fahrzeugs bei Geradeausfahrt, und wobei das Stabilisierungssystem pendelnd ist, wobei der erste Arm (3) und der zweite Arm (4) dazu ausgebildet sind, mit dem Rahmen gelenkig verbunden zu sein, um ein Kippen des Rahmens bei Kurvenfahrten zu ermöglichen.

8. Anordnung nach einem der Ansprüche 1 bis 6, wobei das Verstrebungssystem zwei Stoßdämpfer umfasst, die in Form von Federbeinen montiert sind, einschließlich eines ersten Federbeins (9), das den ersten Arm (3) mit dem Rahmen (2) verbindet, und eines zweiten Federbeins (10), das den zweiten Arm (4) mit dem Rahmen (2) verbindet.

9. Anordnung nach den Ansprüchen 7 und 8, wobei das erste Federbein (9) an seinem unteren Ende am ersten Arm (3) befestigt ist und das zweite Federbein (10) an seinem unteren Ende am zweiten Arm (4) befestigt ist, wobei das obere Ende des ersten Federbeins und das obere Ende des zweiten Federbeins an einem gemeinsamen Träger (11) mit Nockenfunktion befestigt sind, dazu ausgebildet, sich mit einem begrenzten Hub entlang einer festen Führung (12) mit Nockenfolgefunktion zu bewegen, fest bezüglich des Rahmen (2), um die Neigung des Rahmens während der Kurvenfahrt zu ermöglichen.

10. Anordnung nach einem der Ansprüche 1 bis 8, umfassend zwei Stoßdämpfer (13), die aus einem ersten Stoßdämpfer zwischen dem ersten Arm (3) und dem ersten nicht aufgehängten Teil (5) des Fahrzeugs und einem zweiten Stoßdämpfer zwischen dem zweiten Arm (4) und dem zweiten nicht aufgehängten Teil (6) des Fahrzeugs bestehen.

11. Anordnung nach einem der Ansprüche 1 bis 9, wobei der erste nicht aufgehängte Teil (5) und der zweite nicht aufgehängte Teil (6) gewählt sind aus:
- Rädern oder
- Gleitern.

12. Fahrzeug, umfassend eine Stabilisierungsanordnung nach einem der Ansprüche 1 bis 9, wobei das Fahrzeug ein Fahrrad ist.

## Claims

1. A stabilising assembly (1) for a vehicle comprising:
- a chassis (2) forming a sprung portion of the vehicle,
- a stabiliser system comprising two arms consisting of a first arm (3) and a second arm (4),
and wherein the first arm (3) has a proximal end articulated to the chassis (2), and a distal end at which a first unsprung portion (5) of the vehicle is secured, said distal end being configured to move while being contained in a first plane (P1) relative to the chassis (2)
and wherein the second arm (4) has a proximal end articulated to the chassis (2), and a distal end at which a second unsprung portion (6) of the vehicle is secured, configured to move while being contained in a second plane (P2) relative to the chassis
and wherein the first arm (3) and the second arm (4) release an interspace between the two planes (P1, P2), consisting of the first plane (P1) and the second plane (P2),
**characterised in that** said stabiliser system comprises
- at least one flexible link (7) linking the first arm (3) to the second arm (4), configured to work in traction, tending to bring the two arms (3, 4) close to each other,
- a load-carrying device (8), articulated to said chassis, extending in the inter-space between the two planes (P1, P2), bearing on the at least one flexible link (7),
- a bracing system opposing the approach of the two arms (3, 4), and wherein the load-carrying device (8) and the at least one flexible link (7) are configured to cooperate together with a transfer of the load of said load-carrying device (8) on said at least one flexible link (7) so that said at least one flexible link (7) provides a tensile force between the first arm (3) and the second arm (4) correlated to the load of said load-carrying device, the tensile force tending to bring the two arms (3, 4) close to each other being balanced by a contrary force due to the bracing of the two arms (3, 4) by the bracing system.

2. The assembly according to claim 1, wherein the bracing system comprises a first guide surface (S1), substantially parallel to the first plane (P1) cooperating with the first arm (3), and a second guide surface (S2), substantially parallel to the second plane (P2), cooperating with the second arm (4) and wherein the tensile force tending to bring the two arms (3, 4) close to each other is balanced by the contrary force due to the bracing of the two arms (3, 4) by the bracing system with cooperation of the first guide surface (S1) against the first arm (3) and of the second guide surface (S2) against the second arm (4).

3. The stabilising assembly according to claim 1, wherein the load-carrying device (8) is articulated to the chassis (2) about a pivot axis (80).

4. The stabilising assembly according to claim 2 alone or considered in combination with claim 3, wherein said bracing system including the first guide surface (S1) and the second guide surface (S2) is embedded in the load-carrying device (8).

5. The stabilising assembly according to claim 4, wherein the first guide surface (S1) and the second guide surface (S2) are extended therebetween by a third guide surface (S3) of said load-carrying device (8), bearing on the at least one flexible link (7), intermediate between the first guide surface (S1) and the second guide surface (S2).

6. The assembly according to claim 5, wherein the three guide surfaces consisting of the first guide surface (S1), the second guide surface (S2) and the third guide surface (S3) form a continuous surface, along the three guide surfaces, the continuous surface having a U-like shaped profile.

7. The assembly according to one of claims 1 to 5, pendular, wherein the chassis (2) has a first axis according to the direction (d₁) of travel of the vehicle in a straight line and wherein the stabilising system is pendular, the first arm (3) and the second arm (4) being configured to be articulated to the chassis so as to enable the inclination of the chassis during turns.

8. The assembly according to one of claims 1 to 6, wherein said bracing system comprises two strut-fitted shock absorbers, including a first strut-fitted shock absorber (9) linking the first arm (3) to the chassis (2) and a second strut-fitted shock absorber (10) linking the second arm (4) to the chassis (2).

9. The assembly according to claims 7 and 8, wherein the first strut-fitted shock absorber (9) is fastened at its lower end to the first arm (3) and the second strut-fitted shock absorber (10) is fastened at its lower end to the second arm (4), the upper end of the first strut-fitted shock absorber and the upper end of the second strut-fitted shock absorber being fastened to the same support (11) serving as a cam configured to move according to a limited stroke along a fixed guide (12) serving as a cam follower, fixed with respect to the chassis (2) to enable the inclination of the chassis during turns.

10. The assembly according to one of claims 1 to 8, comprising two shock absorbers (13) consisting of a first shock absorber between the first arm (3) and the first unsprung portion (5) of the vehicle, and a second shock absorber between the second arm (4) and the second unsprung portion (6) of the vehicle.

11. The assembly according to one of claims 1 to 9, wherein the first unsprung portion (5) and the second unsprung portion (6) are selected from among:
- wheels, or
- skates.

12. A vehicle comprising a stabilising assembly according to one of claims 1 to 9 wherein the vehicle is a cycle.
